# EUROPÄISCHE PATENTSCHRIFT

(11) **EP 0 931 180 B1**
(45) Veröffentlichungstag und Bekanntmachung des Hinweises auf die Patenterteilung: **20.12.2000**
(21) Anmeldenummer: 96934555.2
(22) Anmeldetag: 07.10.1996
(51) Int. Cl.: C23C 26/02, C23C 30/00, C23C 24/10

(54) **VERFAHREN ZUR HERSTELLUNG EINES SCHNEIDWERKZEUGES**
PROCESS FOR MANUFACTURING A CUTTING TOOL
PROCEDE DE FABRICATION D'UN OUTIL DE COUPE

(43) Veröffentlichungstag der Anmeldung: 28.07.1999
(73) Patentinhaber: BLZ Bayerisches Laserzentrum Gemeinnützige Forschungsgesellschaft mbH, 91056 Erlangen (DE)
(72) Erfinder: WALLMANN, Clemens, D-91052 Erlangen (DE)
(74) Vertreter: Hübner, Gerd, Dipl.-Phys.
(86) Internationale Anmeldenummer: EP9604341
(87) Internationale Veröffentlichungsnummer: WO9815672

(56) Entgegenhaltungen:
- EP-A- 0 562 920
- EP-A- 0 573 928
- WO-A-93/21360
- US-A- 2 841 687

## Beschreibung

Die Erfindung betrifft ein Verfahren zur Herstellung eines Schneidwerkzeuges mit den Merkmalen des Oberbegriffes des Anspruchs 1.

Zur Herstellung eines Schneidwerkzeuges ist es bekannt, deren Schneidkörper aus metallgebundenen Diamantschichten zu fertigen. Dies erfolgt z.B. sintertechnisch oder durch galvanische Abscheidung von Metallen auf vordeponierten Diamantpartikeln. Die derart gefertigten Schneidkörper werden dann durch Löten oder Laserstrahl-Schweißen mit einem Werkzeuggrundkörper verbunden. Nachteilig bei diesen vorbekannten Verfahren ist die umständliche und aufwendige Fertigung des Schneidwerkzeuges mit entsprechend hohen Lohnkosten.

Kostengünstiger kann das Schneidwerkzeug mit Hilfe eines einstufigen Laserstrahl-Beschichtens hergestellt werden. Bei diesem Herstellungsverfahren wird die Schneidstoffe enthaltende Schicht bzw. der Schneidkörper in einem Arbeitsgang hergestellt und mit dem metallischen Werkzeuggrundkörper verbunden. Während dieses Arbeitsganges wird der Werkzeuggrundkörper horizontal, d.h. quer zur Gewichtskraftrichtung bewegt. Eine die Schneidstoffe, z. B. Diamantpartikel enthaltende Substanz wird auf eine den späteren Schneidkörper tragende Oberfläche des bewegten Werkzeuggrundkörpers aufgebracht. Eine Heizeinrichtung beaufschlagt die Tragoberfläche mit Wärmeenergie. Dort wird ein Schmelzbad gebildet, dem die Substanz zugeführt und dort aufgeschmolzen wird. Nachteilig bei diesem Herstellungsverfahren ist das Aufschwimmen der Schneidstoffpartikel im Schmelzbad entgegen der Schwerkraft. Infolge des großen spezifischen Dichteunterschiedes der einzelnen Komponenten der Substanz verlagern sich die Schneidstoffpartikel innerhalb des Schneidkörper-Schmelzbades, wenn die Lebensdauer dieser Schmelze während des Herstellungsprozesses zu groß ist. Dadurch ist die für eine entlang der Aufbauhöhe des Schneidkörpers gleichbleibende Schnittqualität erforderliche gleichmäßige Verteilung der Schneidstoffpartikel innerhalb des Schneidkörpervolumens nicht gegeben. In dem der Tragoberfläche vertikal abgewandten, äußeren Bereich des Schneidkörpers entsteht eine Schneidstoff-Verdichtung, während die der Tragoberfläche zugewandten Bereiche des Schneidkörpers praktisch keine Schneidstoffe enthalten. Das Aufschwimmen der Schneidstoffe und deren ungleichmäßige Verteilung entlang der Aufbauhöhe des Schneidkörpers läßt sich zwar bei Schneidkörpergeometrien bis ca. 2 mm Breite und 3 mm Höhe durch Verkürzung der Erstarrungszeit der Schneidkörper-Schmelze teilweise unterdrücken, bei größeren Schneidkörpergeometrien läßt sich die ungleichmäßige Verteilung der Schneidstoffe durch Veränderung von Parametern, wie Vorschubgeschwindigkeit des Werkzeuggrundkörpers oder Substanz-Massenrate aber nicht verhindern.

Der Erfindung liegt die Aufgabe zugrunde, bei der Herstellung eines Schneidwerkzeugs mit einer auf den Werkzeuggrundkörper aufgebrachten schneidstoffhaltigen Substanz eine gleichmäßige Verteilung der Schneidstoffpartikel innerhalb des Schneidkörpers zu gewährleisten. Diese Aufgabe wird durch die Merkmalskombination des Anspruches 1 gelöst.

Erfindungsgemäß werden die einzelnen Flächenabschnitte der Tragoberfläche in Bewegungsrichtung des Werkzeuggrundkörpers zumindest während der Erstarrungszeit der auf den jeweiligen Flächenabschnitt aufgebrachten Substanz zu der Gewichtskraftrichtung der Schneidstoffpartikel entgegengesetzt bewegt. Hierbei läßt sich die Tragoberfläche gedanklich entlang der Bewegungsrichtung des Werkzeuggrundkörpers in beliebig viele, infinitesimal kleine Flächenabschnitte einteilen. Auf jeden dieser Flächenabschnitte wird nacheinander ein bestimmter Mengenanteil der Substanz aufgebracht und wird dort aufgeschmolzen. Betrachtet man einen derartigen Flächenabschnitt mit dem darauf aufgebrachten Anteil der Substanz, so wird dieser Flächenabschnitt erfindungsgemäß zumindest in dem Zeitraum zwischen dem Aufschmelzen des Substanzanteils und der Erstarrung dieses Schmelzanteils, d. h. zumindest während der Erstarrungszeit der Gewichtskraftrichtung entgegengesetzt bewegt. Mit anderen Worten wird die Substanz unabhängig vom Verlauf der Tragoberfläche immer auf einen der Gewichtskraftrichtung entgegengesetzt bewegten Flächenabschnitt der Tragoberfläche aufgebracht und dort als Bestandteil des Schneidkörpers verarbeitet. Durch die vorgenannte Bewegungsrichtung des mit einem Substanzanteil beaufschlagten Flächenabschnittes der Tragoberfläche erfolgt das Aufschwimmen der Schneidstoffpartikel immer in den davorliegenden, bereits erstarrten Schneidkörperabschnitt. Diese erstarrten Schneidkörperabschnitte bilden deshalb ohne Mehraufwand eine natürliche Barriere gegen ein weiteres Aufschwimmen der zeitlich nachfolgend auf die Tragoberfläche aufgebrachten Schneidstoffpartikel.

Dieses Aufschwimmen der Schneidstoffpartikel führt in Längsrichtung des entstehenden Schneidkörpers zu der gewünschten gleichmäßigen Verteilung der Schneidstoffpartikel, da sich während der Herstellung des Schneidkörpers in dessen Längsrichtung infinitesimal kleine Abschnitte von Substanzschmelzen anreihen, welche alle das gleiche Aufschwimmverhalten von Schneidstoffpartikeln aufweisen. Entlang der Aufbauhöhe des Schneidkörpers ist das herkömmliche Aufschwimmen von Schneidstoffpartikeln aufgrund der Anordnung und Bewegung der Tragoberfläche während der Herstellung des Schneidkörpers völlig vermieden.

Erfindungsgemäß entsteht deshalb ein Schneidkörper mit einer über dessen gesamtes Volumen im wesentlichen gleichmäßigen Verteilung der Schneidstoffe. Dieser in seiner Wirkungsweise erheblich verbesserte Schneidkörper ist kostengünstig mit einer herkömmlichen Vorrichtung herstellbar, da zur Herstellung des Schneidkörpers nur eine veränderte Relativlage zwischen dem sich bewegenden Werkzeuggrundkörper und der herkömmlichen Fertigungsvorrichtung erforderlich ist. Diese Relativlage ist derart, daß die schneidstoffhaltige Substanz immer nur auf den zur Gewichtskraftrichtung entgegengesetzt bewegten Flächenabschnitt der Tragoberfläche aufgebracht wird. Die Relativlage der einzelnen Komponenten, d. h. der Einrichtungen innerhalb der Herstellungsvorrichtung kann vollständig erhalten bleiben. Die gleichmäßige Verteilung der Schneidstoffe innerhalb des Schneidkörpers ist deshalb ohne zusätzlichen Kosten- und Materialaufwand möglich.

Die Erfindung ermöglicht eine gleichmäßige Schneidstoffverteilung innerhalb beliebiger Schneidstoffvolumina. Dies gilt sowohl für plane Tragoberflächen als auch für Tragoberflächen, welche mit einem Oberflächenrelief ausgestattet sind oder im Querschnitt gekrümmt, insbesondere nach Art eines Zylindermantelsegmentes ausgestaltet sind. Lediglich die Bewegungsführung des Werkzeuggrundkörpers muß derart angepaßt sein, daß jeder Flächenabschnitt der Tragoberfläche zumindest während der Erstarrungszeit der aufgebrachten Substanzschmelze zur Gewichtskraftrichtung entgegengesetzt bewegt wird.

Bei den Schneidstoffen handelt es sich z. B. um CBN, Diamant oder SiC.

Für eine besonders gute gleichmäßige Verteilung der Schneidstoffpartikel innerhalb des Schneidkörpers ist jeder einzelne Flächenabschnitt der Tragoberfläche zumindest während der Erstarrungszeit der ihm zugeordneten Substanzschmelze exakt parallel zur Gewichtskraftrichtung angeordnet und seine Bewegungsrichtung ist zumindest während dieser Erstarrungszeit ebenfalls parallel zur Gewichtskraftrichtung angeordnet. In vielen Fällen ist jedoch eine ausreichende gleichmäßige Verteilung der Schneidstoffpartikel bereits dann gegeben, wenn der jeweilige Flächenabschnitt der Tragoberfläche bzw. seine Bewegungsrichtung während der Erstarrungszeit in einem spitzen Winkel zur Gewichtskraftrichtung angeordnet sind. Für eine ausreichende Schneidstoffverteilung beträgt das Winkelmaß der von der Oberflächennormalen des Flächenabschnitts und der Gewichtskraftrichtung zumindest während der Erstarrungszeit der zugeordneten Substanzschmelze gemeinsam eingeschlossene Winkel etwa 60° bis 90°. Hierbei bildet 90° den Idealfall und kann besonders einfach bei planen Tragoberflächen realisiert werden.

Insbesondere bei planen Tragoberflächen ist eine Translationsbewegung des Werkzeuggrundkörpers bzw. ein Translationsantrieb für den Werkzeuggrundkörper geeignet, um eine gleichmäßige Aufbauhöhe des Schneidkörpers und eine gleichmäßige Schneidstoffverteilung zu erzielen (Anspruch 2). Hierdurch lassen sich z. B. auch Honleisten mit üblicherweise planen Tragoberflächen nach dem erfindungsgemäßen Verfahren herstellen.

Eine Rotationsbewegung des Werkzeuggrundkörpers nach Anspruch 3 berücksichtigt Werkzeuggrundkörper mit im Querschnitt kreisbogenförmiger oder kreisförmiger Ausgestaltung, deren Tragoberflächen im Querschnitt kreisbogenförmig verlaufen. Jeder infinitesimal kleine Abschnitt des Kreisbogens verläuft dabei während der an diesem Abschnitt erstarrenden Substanzschmelze angenähert parallel zur Gewichtskraftrichtung. Durch die Maßnahmen des Anspruches 3 sind z. B. auch Sägeblätter nach dem erfindungsgemäßen Verfahren herstellbar.

Gemäß Anspruch 4 ist die schneidstoffhaltige Substanz eine Mischung aus einem Metallpulver (z. B. Bronzepulver) und den Schneidstoffpartikeln. Diese Mischung ermöglicht eine gute Haftfestigkeit des erstarrten Schneidkörpers auf dem Werkzeuggrundkörper. Darüberhinaus unterstützt diese Mischung die Herstellung des Schneidkörpers in einem einzigen Beschichtungsdurchgang, d. h. in einem einzigen Durchgang des Aufbringens der Substanz auf die Tragoberfläche.

Anspruch 5 schlägt Diamantpartikel als in der Praxis bewährte Schneidstoffpartikel vor. Hierdurch wird eine besonders hohe Lebensdauer des Schneidkörpers mit gleichbleibend guter Schnittleistung erzielt.

Gemäß einer bevorzugten Ausführungsvariante wird die Substanz auf die Tragoberfläche aufgespritzt (Anspruch 6). Durch diese Maßnahme wird ein bestimmter Substanzanteil auf den zugeordneten Flächenabschnitt der Tragoberfläche konzentriert. Der Anteil von unverarbeitetem Substanzanteil wird deshalb gesenkt. Dadurch lassen sich die Herstellungskosten der Schneidkörper und des gesamten Schneidwerkzeugs reduzieren. Außerdem verbessert die Druckbeaufschlagung der Tragoberfläche mit den Substanzpartikeln den mechanisch stabilen Aufbau des Schneidkörpers und dessen Haftfestigkeit am Werkzeuggrundkörper.

Anspruch 7 schlägt die Energie eines Laserstrahls zur Einwirkung auf die Tragoberfläche und zur Schaffung der Substanzschmelze vor. Hierbei handelt es sich um einen Laser, der mit ausreichender Brennfleckgröße die Tragoberfläche belichtet. Insbesondere ist die Heizeinrichtung als Festkörperlaser (Nd: YAG-Laser) ausgebildet. Vorteilhaft kann diese Heizeinrichtung als handelsübliches Zukaufteil verhältnismäßig kostengünstig beschafft werden. Hierdurch lassen sich die Kosten für die Herstellung des Schneidwerkzeuges begrenzen.

Mit Hilfe einer den Werkzeuggrundkörper und dessen Tragoberflächen umgebenden Gußform, insbesondere einer Kokille lassen sich Schneidkörper mit vordefinierter Geometrie fertigungstechnisch einfach und exakt herstellen (Anspruch 8). Mit Hilfe dieser Gußform können eine erforderliche quaderförmige Geometrie der erstarrenden Substanzschmelze genau eingehalten und Schneidkörper mit beliebiger Länge hergestellt werden, ohne daß es entlang der Schneidkörperlängsrichtung zu Abweichungen von den geometrischen Sollabmessungen und der Sollform des erstarrten Schneidkörpers kommt. Der Kokillenguß bzw. Kokillen sind aus BROCKHAUS NATURWISSENSCHAFTEN UND TECHNIK, WIESBADEN 1983, ISBN 3-7653-0357-7. Bd. 2, S. 204 und Bd. 3, S. 84 bekannt. Die Kokillen als Gußformen werden aus Gußeisen, Stahl hergestellt. Für die Herstellung des Schneidwerkzeugs nach dem erfindungsgemäßen Verfahren sind auch Kokillen aus Kupfer oder Wolfram geeignet.

Die Erfindung wird anhand der in den Figuren dargestellten Ausführungsbeispiele näher erläutert. Es zeigen:
- Fig. 1: eine Seitenansicht einer ausschnittsweise dargestellten Vorrichtung zum Herstellen eines Schneidwerkzeuges mit quer zur Gewichtskraftrichtung angetriebenem Werkzeuggrundkörper gemäß dem Stand der Technik,
- Fig. 2: eine vergrößerte Schnittdarstellung des erstarrten Schneidkörpers gemäß dem Stand der Technik entsprechend der Schnittlinie II und II in Fig. 1,
- Fig. 3: eine Seitenansicht einer abschnittsweise dargestellten Vorrichtung zum Herstellen eines Schneidwerkzeugs mit erfindungsgemäß zur Gewichtskraftrichtung entgegengesetzt angetriebenem Werkzeuggrundkörper,
- Fig. 4: die vergrößerte Schnittdarstellung des erfindungsgemäß hergestellten Schneidkörpers entsprechend der Schnittlinie IV - IV in Fig. 3,
- Fig. 5: die Seitenansicht einer zweiten Ausführungsform eines erfindungsgemäß hergestellten Schneidwerkzeuges und
- Fig. 6: eine teilweise geschnittene Draufsicht auf das Schneidwerkzeug und die zur Herstellung des Schneidwerkzeugs verwendete Vorrichtung gemäß Pfeilrichtung VI in Fig. 5.

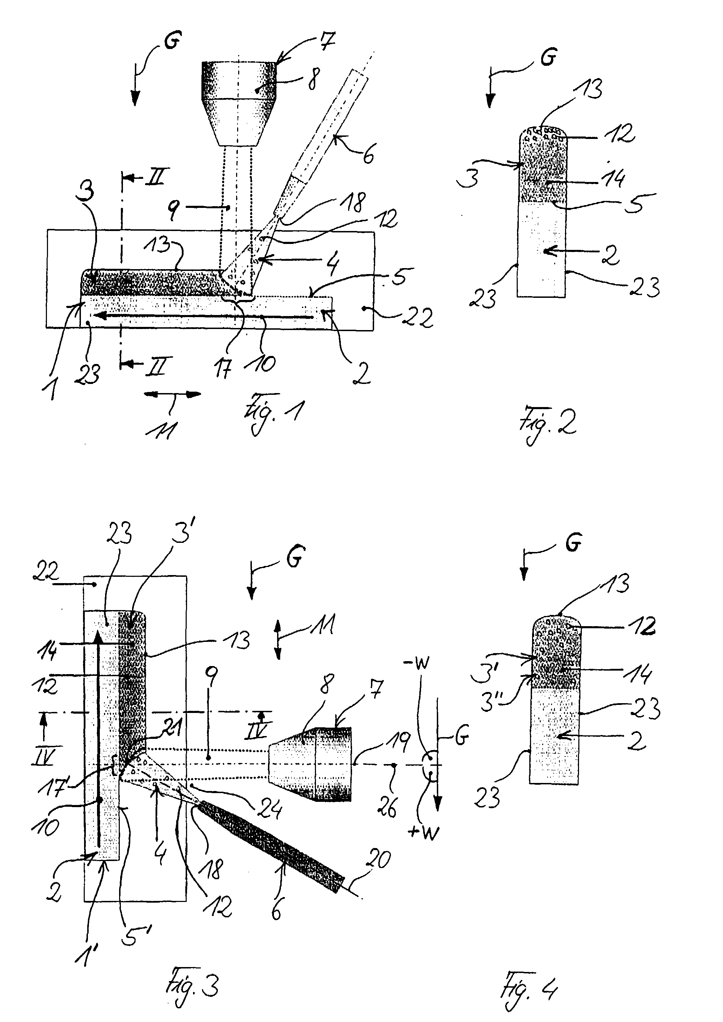

Das Schneidwerkzeug gemäß Fig. 1 ist als Honleiste 1 zum Abschleifen metallischer Oberflächen ausgebildet. Sie weist im wesentlichen eine quaderförmigen, metallische Trägerleiste 2 und mindestens einen von ihr getragenen Schneidkörper 3 als Schleifkörper auf. Der Schneidkörper 3 wird in seinem Ausgangszustand als schneidstoffhaltige und metallische Substanz 4 auf eine plane Tragoberfläche 5 der metallischen Trägerleiste 2 aufgebracht. Hierzu wird die schneidstoffhaltige Substanz 4 mit Hilfe einer pneumatisch betriebenen Zuführdüse 6 auf die Tragoberfläche 5 aufgespritzt. Gleichzeitig sendet ein Laser 7 mittels seines Laserkopfes 8 und einer Fokussieroptik einen Laserstrahl 9 aus, dessen Energie die in die Wechselwirkungszone von Laserstrahl 9 und Tragoberfläche 5 gespritzten bzw. geblasenen Partikel der Substanz 4 aufschmilzt und ein Schmelzbad bildet, in welches die Substanz 4 eingebracht wird und dort aufschmilzt. Gleichzeitig haften die Partikel der Substanz 4 an der von dem Laserstrahl 9 ebenfalls aufgeschmelzten Tragoberfläche 5 an. Auf diese Weise wird die Substanz 4 mit der Tragoberfläche 5 verbunden und erstarrt hierbei zum Schneidkörper 3.

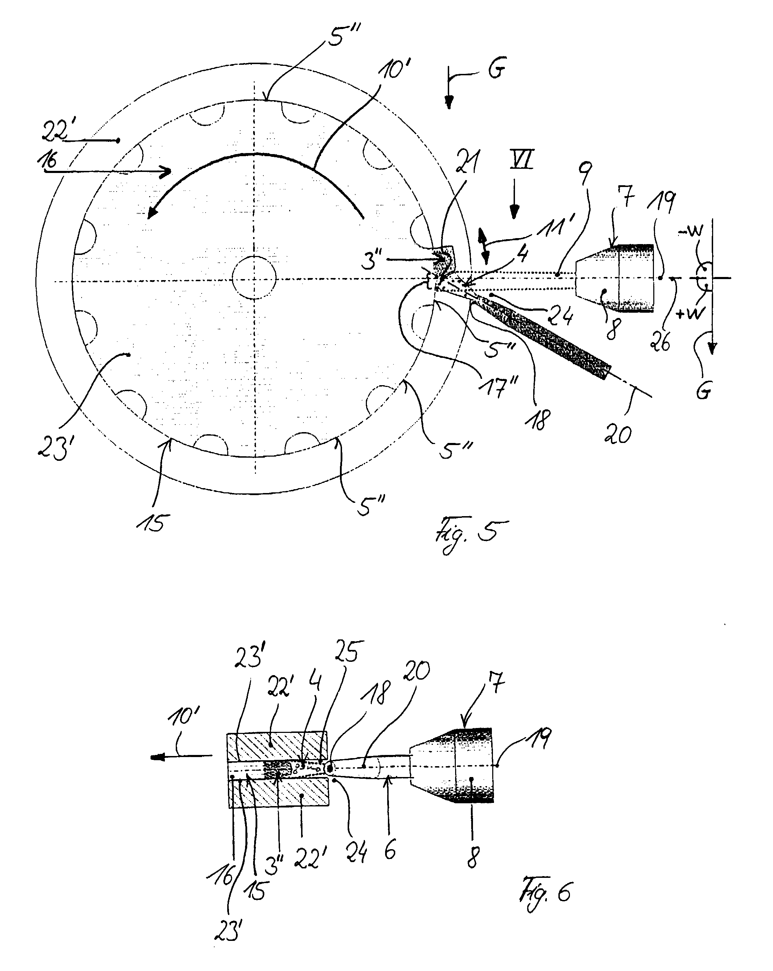

Die Honleiste 1 gemäß Fig. 1 wird in einer zur Gewichtskraftrichtung G rechtwinklig angeordneten Bewegungsrichtung 10 angetrieben. Die entlang einer parallel zur Bewegungsrichtung 10 verlaufenden Schneidkörperlängsrichtung 11 angeordneten, infinitesimal kleinen Schneidkörperabschnitte haben nach dem Aufschmelzen der Substanz 4 eine bestimmte Erstarrungszeit. Während dieser Erstarrungszeit schwimmen die in der Substanz 4 enthaltenen Schneidstoffpartikel 12 entgegen der Gewichtskraftrichtung G auf. Aufgrund der zur Gewichtskraftrichtung G rechtwinklig verlaufenden Bewegungsrichtung 10 schwimmen die Schneidstoffpartikel 12 entlang der Aufbauhöhe des Schneidkörpers 3 in Richtung einer der Tragoberfläche 5 gegenüberliegenden Schneidkante 13 des Schneidkörpers 3 auf. Das Ergebnis bei der Herstellung des Schneidwerkzeuges gemäß dem Stand der Technik ist eine Entmischung bzw. Konzentration der Schneidstoffpartikel 12 in den Bereich der Schneidkante 13, während die übrigen Anteile des eine Metallmatrix 14 bildenden Metallpulvers eine sehr viel geringere Anzahl von Schneidstoffpartikeln 12 bzw. überhaupt keine Schneidstoffpartikel 12 enthalten (Fig. 2).

Bei der erfindungsgemäßen Herstellung des Schneidwerkzeugs bleibt der Aufbau der Herstellungsvorrichtung selbst gegenüber dem Stand der Technik gemäß Fig. 1 erhalten (Fig. 3, Fig. 5, Fig. 6). Die erfindungsgemäße Herstellung der Schneidkörper 3' einer Honleiste 1' (Fig. 3) und der Schneidkörper 3" eines Sägeblattes 15 (Fig. 5) als weitere Ausführungsform eines Schneidwerkzeugs wird allein durch eine gegenüber Fig. 1 veränderte Relativanordnung der Bewegungsrichtungen 10, 10' und der Herstellungsvorrichtung gegenüber der Gewichtskraftrichtung G erzielt. In Fig. 3 werden die Trägerleiste 2 und die Tragoberfläche 5 der Honleiste 1' von einer hier nicht dargestellten Antriebseinrichtung translatorisch in Bewegungsrichtung 10 der Gewichtskraftrichtung G entgegengesetzt vorgeschoben. Die Bewegungsrichtung 10 ist in diesem Fall parallel zur Gewichtskraftrichtung G angeordnet, kann bei einem weiteren Ausführungsbeispiel jedoch auch einen spitzen Winkel bis zu höchstens etwa 30° mit der Gewichtskraftrichtung G einschließen. In Fig. 5 wird ein im Querschnitt kreisförmiges, als Werkzeuggrundkörper wirksames, metallisches Trägerblatt 16 des Sägeblattes 15 durch eine hier nicht dargestellte Antriebseinrichtung in Bewegungsrichtung 10' rotatorisch vorgeschoben. Sowohl bei der planen Tragoberfläche 5' der Trägerleiste 2 als auch bei der zylindermantelförmigen Tragoberfläche 5" des Trägerblattes 16 wird die schneidstoffhaltige Substanz 4 immer auf einen infinitesimal kleinen, etwa parallel zur Gewichtskraftrichtung G verlaufenden Flächenabschnitt 17' bzw. 17" aufgebracht und erstarrt dort. Die Oberflächennormale 26 des Flächenabschnitts 17' bzw. 17" schließt mit der Gewichtskraftrichtung G einen Winkel w von etwa 90° ein. In weiteren Ausführungsbeispielen - je nach Anordnung des Flächenabschnitts 17' bzw. 17" oberhalb (entspricht -w) oder unterhalb (entspricht +w) der Laserstrahlachse 19 - beträgt der Winkel w: 90° > w > 60°. Die dem Flächenabschnitt 17' bzw. 17" zugeordneten Schneidstoffpartikel 12 schwimmen immer etwa in Schneidkörperlängsrichtung 11 bzw. 11' auf. Dadurch entsteht eine entlang der gesamten Aufbauhöhe des Schneidkörpers 3' bzw. 3" gleichmäßige Verteilung der vorzugsweise als Diamantpartikel ausgebildeten Schneidstoffpartikel 12 innerhalb der Metallmatrix 14 (Fig. 4).

Die plane Tragoberfläche 5 und die zylindermantelförmige Tragoberfläche 5' sind lediglich exemplarische Beispiele für die erfindungsgemäße Herstellung von Schneidkörpern 3' bzw. 3". Selbstverständlich sind auch andere Querschnittsformen von Tragoberflächen für die erfindungsgemäße Herstellung des Schneidwerkzeugs möglich. Wesentlich ist es, daß bei jeder Ausführungsform eines Werkzeuggrundkörpers und der Tragoberfläche zumindest derjenige Flächenabschnitt zur Gewichtskraftrichtung G entgegengesetzt bewegt wird, dessen zugeordneter Anteil der schneidstoffhaltigen Substanz 4 sich gerade im Erstarrungsprozeß mit dem für diesen Erstarrungsprozeß charakteristischen Aufschwimmen der Schneidstoffpartikel 12 befindet.

Für die Herstellung der Schneidkörper 3', 3" werden der Laser 7 als Heizeinrichtung und die Zuführdüse 6 als Zuführeinrichtung verwendet. Die Zuführdüse 6 ist mit ihrer Düsenöffnung 18 zur Tragoberfläche 5' bzw. 5" hin gerichtet. Der Laserstrahl 9 des Lasers 7 ist ebenfalls zur Tragoberfläche 5' bzw. 5" hin gerichtet. Hierbei verläuft die Laserstrahlachse 19 quer zur Gewichtskraftrichtung G und etwa lotrecht zum bestrahlten Tragoberflächenabschnitt 17' bzw. 17". Eine in Längsrichtung der Zuführdüse 6 verlaufende Düsenachse 20 und die Laserstrahlachse 19 schließen einen spitzen Winkel ein, wobei der Winkelscheitel 21 dieses spitzen Winkels von der Tragoberfläche 5' bzw. 5" beabstandet innerhalb des Volumens des Schneidkörpers 3' bzw. 3" liegt.

Der Bereich etwa des parallel zur Gewichtskraftrichtung G verlaufenden Flächenabschnittes 17' bzw. 17" wird während der Herstellung der Schneidkörper 3' bzw. 3" von dem Laserstrahl 9 belichtet. In die Wechselwirkungszone von Laserstrahl 9 und Flächenabschnitt 17' bzw. 17" wird die schneidstoffhaltige Substanz 4 geblasen bzw. gespritzt. In dieser Wechselwirkungszone schmelzen bei ausreichender Leistungsdichte (z.B. 5 x 10³ W/cm²) des Laserstrahls 9 an dem Flächenabschnitt 17' bzw. 17" anhaftende Partikel der Substanz 4 auf und bilden ein metallisches Schmelzbad, in welches die zugeführte Substanz 4 eingebracht wird und dort aufschmilzt. Während des Erstarrungsprozesses des Schmelzbades verläuft der Flächenabschnitt 17' bzw. 17" etwa parallel zur Gewichtskraftrichtung G, so daß die Schneidstoffpartikel 12 nur in Schneidkörperlängsrichtung 11 bzw. 11' aufschwimmen.

Um eine quaderförmige Geometrie des zum Schneidkörper 3' bzw. 3" erstarrenden Schmelzbades zu gewährleisten, sind die Honleiste 1' bzw. das Sägeblatt 15 von einer im Querschnitt rechteckigen Kokille 22 bzw. einer im Querschnitt kreisförmigen Kokille 22' umgeben. Der Einfachheit halber ist in Fig. 3 und Fig. 5 jeweils nur eine Hälfte der Kokille 22 bzw. 22' dargestellt. Die Kokille flankiert die beiden gegenüberliegenden Seitenflächen 23 der Trägerleiste 2 bzw. Seitenflächen 23' des Trägerblattes 16 und ragt über die Tragoberfläche 5' bzw. 5" in Richtung der Zuführseite 24 der schneidstoffhaltigen Substanz 4 hinaus. Die Kokillen 22 bzw. 22' begrenzen einen die Zuführseite 24 mit der Tragoberfläche 5' bzw. 5" verbindenen Hohlraum, der in Fig. 6 als Gußhohlraum 25 bezeichnet ist. Durch diesen Hohlraum hindurch wird die Substanz 4 auf die Tragoberflächen 5', 5" aufgebracht.

### Bezugszeichenliste

- 1,1': Honleiste
- 2: Trägerleiste
- 3, 3', 3": Schneidkörper
- 4: schneidstoffhaltige Substanz
- 5, 5',5": Tragoberfläche
- 6: Zuführdüse
- 7: Laser
- 8: Laserkopf
- 9: Laserstrahl
- 10,10': Bewegungsrichtung
- 11, 11': Schneidkörperlängsrichtung
- 12: Schneidstoffpartikel
- 13: Schneidkante
- 14: Metallmatrix
- 15: Sägeblatt
- 16: Trägerblatt
- 17,17', 17": Flächenabschnitt
- 18: Düsenöffnung
- 19: Laserstrahlachse
- 20: Düsenachse
- 21: Winkelscheitel
- 22, 22': Kokille
- 23, 23': Seitenfläche
- 24: Zuführseite
- 25: Gußhohlraum
- 26: Oberflächennormale
- G: Gewichtskraftrichtung
- w: Winkel

## Patentansprüche

1. Verfahren zur Herstellung eines Schneidwerkzeuges (1,1',15) mit mindestens einem Schneidkörper (3,3',3"), wobei
- ein Werkzeuggrundkörper (2,16) des Schneidwerkzeugs (1,1',15) während der Herstellung des Schneidkörpers (3,3',3") bewegt wird,
- eine Schneidstoffpartikel (12) enthaltende Substanz (4) auf eine Tragoberfläche (5,5',5") des bewegten Werkzeuggrundkörpers (2,16) aufgebracht wird,
- die Substanz (4) an der Tragoberfläche (5,5',5") aufgeschmolzen und zum Schneidkörper (3,3',3") erstarrend mit der Tragoberfläche (5,5',5") verbunden wird,
dadurch gekennzeichnet,
- daß die Tragoberfläche (5',5") in Bewegungsrichtung (10,10') des Werkzeuggrundkörpers (2,16) in beliebig viele Flächenabschnitte (17',17") einteilbar ist und
- daß jeder Flächenabschnitt (17',17") zumindest während der Erstarrungszeit der auf ihn aufgebrachten Substanz (4) zu der Gewichtskraftrichtung (G) derart entgegengesetzt bewegt wird, daß die Oberflächennormale (26) des Tragoberflächenabschnitts (17',17") und die Gewichtskraftrichtung (G) gemeinsam zumindest während der Erstarrungszeit der auf den jeweiligen Flächenabschnitt (17',17") aufgebrachten Substanz (4) einen Winkel (±w) einschließen, wobei 90° ≥ w ≥ 60°.

2. Verfahren nach Anspruch 1,
gekennzeichnet durch
eine Translationsbewegung (10) des Werkzeuggrundkörpers (2).

3. Verfahren nach Anspruch 1,
gekennzeichnet durch
eine Rotationsbewegung (10') des Werkzeuggrundkörpers (16).

4. Verfahren nach einem der Ansprüche 1-3,
dadurch gekennzeichnet,
daß eine aus Metallpulver (14) und Schneidstoffpartikeln (12) bestehende Substanz (4) auf die Tragoberfläche (5',5") aufgebracht und aufgeschmolzen wird.

5. Verfahren nach einem der Ansprüche 1-4,
dadurch gekennzeichnet,
daß die Schneidstoffpartikel (12) Diamantpartikel sind.

6. Verfahren nach einem der Ansprüche 1-5,
dadurch gekennzeichnet,
daß die Substanz (4) auf die Tragoberfläche (5',5") aufgespritzt wird.

7. Verfahren nach einem der Ansprüche 1-6,
dadurch gekennzeichnet,
daß die Substanz (4) durch die Energie eines Laserstrahls (9) an der Tragoberfläche (5',5") aufgeschmolzen wird.

8. Verfahren nach einem der Ansprüche 1-7,
dadurch gekennzeichnet,
daß der Schneidkörper (3',3") nach Art eines Formgusses, insbesondere eines Kokillengusses, hergestellt wird.

## Claims

1. A method of manufacturing a cutting tool (1, 1', 15) having at least one cutting body (3, 3', 3"),
- a base body (2, 16) of the cutting tool (1, 1', 15) being moved during the manufacture of the cutting body (3, 3', 3"),
- a substance (4) containing particles of cutting material (12) being deposited on a bearing surface (5, 5', 5") of the moved base body (2, 16),
- the substance (4) being melted on the bearing surface (5, 5',. 5") and united with the bearing surface (5, 5', 5") while solidifying to form the cutting body (3, 3', 3"),
characterized
- in that the bearing surface (5', 5") can be divided into any number of sections (17', 17") in the direction of displacement (10, 10') of the base body (2, 16), and
- in that each section (17', 17"), at least during the setting time of the substance (4) deposited thereon, is moved in a direction opposite to that of the force of gravity (G) such that the surface normal line (26) of the bearing surface section (17', 17") and the direction of the force of gravity (G) jointly enclose an angle (±w) at least during the setting time of the substance (4) deposited on the respective section (17', 17"), 90° ≥ w ≥ 60° applying to the angle (±w).

2. A method according to claim 1,
characterized
by a translational motion (10) of the base body (2).

3. A method according to claim 1,
characterized
by a rotational motion (10') of the base body (16).

4. A method according to one of claim 1 to 3,
characterized
in that a substance (4) consisting of metal powder (14) and particles of cutting material (12) is deposited and melted on the bearing surface (5', 5").

5. A method according to one of claims 1 to 4,
characterized
in that the particles of cutting material (12) are diamond particles.

6. A method according to one of claims 1 to 5,
characterized
in that the substance (4) is injected on the bearing surface (5', 5").

7. A method according to one of claims 1 to 6,
characterized
in that the substance (4) is melted on the bearing surface (5', 5") by the energy of a laser beam (9).

8. A method according to one of claims 1 to 7,
characterized
in that the cutting body (3', 3") is produced in the way of a casting, in particular of a mold casting.

## Revendications

1. Procédé de fabrication d'un outil de coupe (1, 1', 15) avec au moins un corps de coupe (3, 3', 3"),
- le corps de base d'outil (2, 16) de l'outil de coupe (1, 1', 15) étant déplacé durant la fabrication du corps de coupe (3, 3', 3"),
- une substance (4) contenant des particules de matière de coupe (12) étant appliquée sur une surface portante (5, 5', 5") du corps de base d'outil déplacé (2, 16),
- la substance (4) est fondue sur la surface portante (5, 5', 5") et reliée à la surface portante (5, 5', 5") en se solidifiant sous forme de corps de coupe (3, 3', 3"),
caractérisé en ce que
- la surface portante (5', 5") peut être divisée en un nombre quelconque de portions de surface (17', 17") dans la direction de déplacement (10, 10') du corps de base d'outil (2, 16) et,
- au moins pendant la durée de solidification de la substance (4) qui y est appliquée, chaque portion de surface (17', 17") est déplacée à l'opposé du sens de gravité (G), de façon que la perpendiculaire (26) à la surface de la portion de surface portante (17, 17") et le sens de gravité (G) forment ensemble, au moins pendant la durée de solidification de la substance (4) appliquée sur la portion de surface correspondante (17', 17"), un angle (±w), sachant que 90° ≥ w ≥ 60°.

2. Procédé selon la revendication 1, caractérisé par un mouvement de translation (10) du corps de base d'outil (2).

3. Procédé selon la revendication 1, caractérisé par un mouvement de rotation (10') du corps de base d'outil (16).

4. Procédé selon l'une des revendications 1 à 3, caractérisé en ce qu'une substance (4) constituée de poudre métallique (14) et de particules de matière de coupe (12) est appliquée et fondue sur la surface portante (5', 5").

5. Procédé selon l'une des revendications 1 à 4, caractérisé en ce que les particules de matière de coupe (12) sont des particules de diamant.

6. Procédé selon l'une des revendications 1 à 5, caractérisé en ce que la substance (4) est appliquée sur la surface portante (5', 5") par projection.

7. Procédé selon l'une des revendications 1 à 6, caractérisé en ce que la substance (4) est fondue au niveau de la surface portante (5', 5") par l'énergie d'un rayon laser (9).

8. Procédé selon l'une des revendications 1 à 7, caractérisé en ce que le corps de coupe (3', 3") est fabriqué à la façon d'une pièce coulée en moule, en particulier d'une pièce coulée en coquille.
